# EUROPÄISCHE PATENTANMELDUNG

(11) **EP 3 915 746 A1**
(43) Veröffentlichungstag der Anmeldung: **01.12.2021**
(21) Anmeldenummer: 21173407.4
(22) Anmeldetag: 11.05.2021
(51) Int. Cl.: B28C 5/42, B60L 1/00, B60P 3/16

(54) **FAHRMISCHER MIT ELEKTRISCHEM TROMMELANTRIEB UND VORRICHTUNG FÜR DESSEN NOTVERSORGUNG**

(30) Priorität: 26.05.2020 DE 202020102998 U; 03.03.2021 DE 102021105108
(71) Anmelder: Liebherr-Mischtechnik GmbH, 88427 Bad Schussenried (DE)
(72) Erfinder: Scherzinger, Andreas, 88422 Oggelshausen (DE); Pifko, Alexander, 88250 Weingarten (DE); Stephan, Alexander, 88427 Bad Schussenried (DE)
(74) Vertreter: Laufhütte, Dieter

(57) **Zusammenfassung**

Die Erfindung betrifft einen Fahrmischer mit wenigstens einem elektrischen Trommelmotor (60) zum Antrieb der Mischtrommel (90), wobei der Energieversorgungsanschluss des Trommelmotors (60) über eine elektrische Verbindungsleitung mit der internen Elektronik des Fahrmischers verbunden ist, wobei der Versorgungsanschluss ein Verbindungselement, z.B. Steckerelement (55b), zur lösbaren Anbindung (55) der Verbindungsleitung am Trommelmotor (60) umfasst und das Verbindungselement (55b) nach dem Lösen der internen Verbindungsleitung den Anschluss einer externen Vorrichtung (100) zur Energieversorgung des Trommelmotors (60) ermöglicht.

## Beschreibung

Die Erfindung betrifft einen Fahrmischer mit wenigstens einem elektrischen Trommelmotor zum Antrieb der Mischtrommel, wobei der Versorgungsanschluss des Trommelmotors im regulären Betrieb über eine elektrische Verbindungsleitung mit der internen Elektronik des Fahrmischers verbunden ist.

Die fortschreitende Elektrifizierung findet auch Eingang bei Fahrmischern, insbesondere Betonfahrmischern, die bisher überwiegend hydraulisch betrieben wurden. Bei elektrischen Modellen wird die Mischtrommel von einem elektrischen Trommelmotor gedreht. Die Energieversorgung kann rein elektrisch oder auch mittels diesel-elektrischem Antrieb erfolgen. Über einen zusätzlichen Energiespeicher kann die Mobilität des Fahrmischers gesichert werden.

Kritisch bei Fahrmischern ist ein Ausfall des Trommelantriebs, da eine Unterbrechung der Drehbewegung zu einem Aushärten des Betons innerhalb der Trommel führen kann. Das Aushärten des Betons in der Mischtrommel führt jedoch zu einem immens hohem wirtschaftlichen Schaden, da ein kostenintensiver Tausch der Mischertrommel notwendig ist, der zudem eine gewisse Still- und Ausfallzeit des Fahrmischers zur Folge hat. Aus diesem Grund ist es bereits bekannt, im Falle eines Ausfalls des Trommelantriebs auf eine Notversorgung umzuschalten, um die Trommelbewegung zumindest eingeschränkt so lange aufrechtzuerhalten bis die Trommel vollständig entleert werden konnte.

Bei einer bekannten Lösung des Standes der Technik ist dazu ein gesonderter Notelektromotor verbaut, der neben dem Trommelhauptmotor sitzt und im Notfall über ein zuschaltbares Getriebe mit der Trommelwelle verbindbar ist. Im regulären Betrieb ist die mechanische Verbindung zwischen Notmotor und Trommel unterbrochen.

Ein Nachteil der bekannten Lösung besteht darin, dass ein solcher Notmotor zusätzlichen Bauraum beansprucht und teuer ist. Ebenso kann bei dieser Lösung ein Fehler in der Elektronik, insbesondere Leistungselektronik auch zu einem Totalausfall führen.

Die Aufgabe der vorliegenden Erfindung besteht daher darin, eine verbesserte Lösung für einen Notbetrieb eines Fahrmischers aufzuzeigen.

Gelöst wird diese Aufgabe durch einen Fahrmischer gemäß den Merkmalen des Anspruchs 1. Vorteilhafte Ausführungen des Fahrmischers sind Gegenstand der abhängigen Ansprüche.

Erfindungsgemäß wird für einen gattungsgemäßen Fahrmischer vorgeschlagen, die elektronische Versorgungsanbindung des regulären Trommelmotors lösbar auszuführen, sodass die Energieversorgungsleitung des Trommelmotors im Fehlerfall vom Trommelmotor gelöst werden kann. Dazu sieht der Trommelmotor ein entsprechendes Verbindungselement für eine lösbare Verbindung vor. Bevorzugt ist hier ein Steckverbindungselement, um die Verbindungsleitung auf das Steckelement des Trommelmotors aufstecken bzw. abziehen zu können.

Nach dem Lösen der Verbindungsleitung vom Trommelmotor kann dieser erfindungsgemäß über eine externe Energiequelle mit idealerweise eigenständiger Leistungselektronik gespeist werden, so dass auch bei einem Fehlerfall in der internen Elektronik des Fahrmischers ein Notbetrieb aufrechterhalten werden kann. Für die Erzeugung der Drehbewegung der Trommel wird idealerweise nur noch der Trommelmotor des Fahrmischer verwendet, d.h. sämtliche sonstigen Elektronikkomponenten des Fahrmischers werden nicht benötigt.

Diese Lösung hat ebenso den Vorteil, dass durch die Verwendung des regulären Trommelmotors auch im Notbetrieb die volle Antriebsleistung und -funktionen zur Verfügung stehen, vorausgesetzt die externe Energieversorgung kann die notwendige Leistung bereitstellen.

Gemäß einer vorteilhaften Ausführungsform des Fahrmischers umfasst dieser einen diesel-elektrischen Antrieb mit internem Generator. Die erzeugte elektrische Energie des Generators wird über einen Gleichrichter in den Zwischenkreis des Fahrmischers gespeist. Ein oder mehrere an den Zwischenkreis angebundene Energiespeicher können bevorzugt zur Pufferung der erzeugten Energie dienen.

Der Trommelmotor ist vorzugsweise als Drehstrommotor ausgeführt, dieser über einen Wechselrichter mit dem Zwischenkreis über die Verbindungsleitung verbunden ist. Im Falle eines Drehstrommotors umfasst die Verbindungsleitung die einzelnen Phasenleiter. Der Wechselrichter kann über eine Steuerung zur Einstellung der Drehrichtung und Drehzahl des Trommelmotors angesteuert werden.

Neben dem erfindungsgemäßen Fahrmischer betrifft die vorliegende Erfindung auch eine Vorrichtung zur Notversorgung eines Fahrmischers gemäß der vorliegenden Erfindung. Die Vorrichtung dient zur Bereitstellung einer Versorgungspannung zum Notbetrieb des Trommelmotors. Die Vorrichtung umfasst eine Verbindungsleitung mit einem komplementären Verbindungselement, vorzugsweise Steckerelement zur Verbindung mit dem Versorgungsanschluss des Trommelmotors eines Fahrmischers. Mittels eines internen Spannungswandler lässt sich die Ausgangsspannung der Vorrichtung auf die benötigte Betriebsspannung und/oder Frequenz des Trommelmotors transformieren, wobei dadurch vorzugsweise auch die Drehrichtung und Drehzahl vorgebbar sind.

Für den Notbetrieb des Fahrmischers wird der Trommelantrieb zunächst von der internen Elektronik des Fahrmischers getrennt und stattdessen mit der externen Vorrichtung verbunden, die vollständig autark vom Fahrmischer arbeitet.

Idealerweise verfügt eine solche Vorrichtung über einen Netzanschluss zum Anschluss an ein externes Versorgungsnetz, beispielsweise ein Baustellennetz. Der interne Spannungswandler transformiert die Spannung des Versorgungsnetzes auf die gewünschte Betriebsspannung des Trommelantriebs. Denkbar ist auch der Anschluss der Vorrichtung an einen Generator oder eine sonstige Energiequelle.

Gemäß bevorzugter Ausführung ist die Vorrichtung eine portable Lösung, die sich durch einen, zwei oder mehrere Personen problemlos bewegen lässt. Die mobile Vorrichtung umfasst ein Gehäuse, in dem alle notwendigen Komponenten wie bspw. der interne Spannungswandler sowie etwaige Steuerungsbausteine untergebracht sind. Am Gehäuse selbst können Tragegriffe oder auch Transportrollen vorgesehen sein. Eine interne Steuerung und Bedienelemente erlauben die Bedienung des internen Spannungswandler, um eine automatische oder manuelle Bedienung des versorgten Trommelmotors zu erlauben. Insbesondere lässt sich mittels der Steuerung bzw. der Bedienelemente der Trommelmotor starten oder stoppen. Auch die Vorgabe der Drehrichtung und/oder der Drehzahl, zumindest innerhalb eines eingeschränkten Drehzahlbereichs kann möglich sein.

Eine integrierte Sensorik dient zur Überwachung der Leistungsabgabe bzw. Leistungsanforderung des Trommelantriebs. So kann die Sensorik bspw. überwachen, ob das angeforderte Drehmoment des Trommelantriebs durch das Versorgungsnetz bzw. den Generator bedienbar ist und gegebenenfalls von der Steuerung eine Begrenzung des maximal erzeugbaren Drehmomentes des Trommelmotors erfolgen. Ebenso kann eine Sensorik zur Temperaturüberwachung der internen Elektronikbausteine vorgesehen sein. Die interne Steuerung der Vorrichtung ist dann so konfiguriert, dass bei einem kritischen Temperaturanstieg eine Reduzierung des Drehmomentes bzw. der Leistungsabgabe initiiert wird.

Von der Erfindung ist ebenso ein System umfasst, das aus einem Fahrmischer gemäß der vorliegenden Erfindung sowie einer Vorrichtung zur Notversorgung gemäß der vorliegenden Erfindung gebildet ist. Für das System ergeben sich somit dieselben Vorteile und Eigenschaften, wie sie bereits vorstehend anhand des Fahrmischers sowie der Vorrichtung näher aufgezeigt wurden. Auf eine wiederholende Beschreibung wird aus diesem Grund verzichtet.

Weitere Vorteile und Eigenschaften der Erfindung sollen nachfolgend anhand eines in den Figuren dargestellten Ausführungsbeispiels näher erläutert werden. Es zeigen:
- Figur 1:: ein Schemabild des Antriebsstrangs des erfindungsgemäßen Fahrmischers im Normalbetrieb und
- Figur 2:: das Schema gemäß Figur 1 für den erfindungsgemäßen Fahrmischer im Notbetrieb.

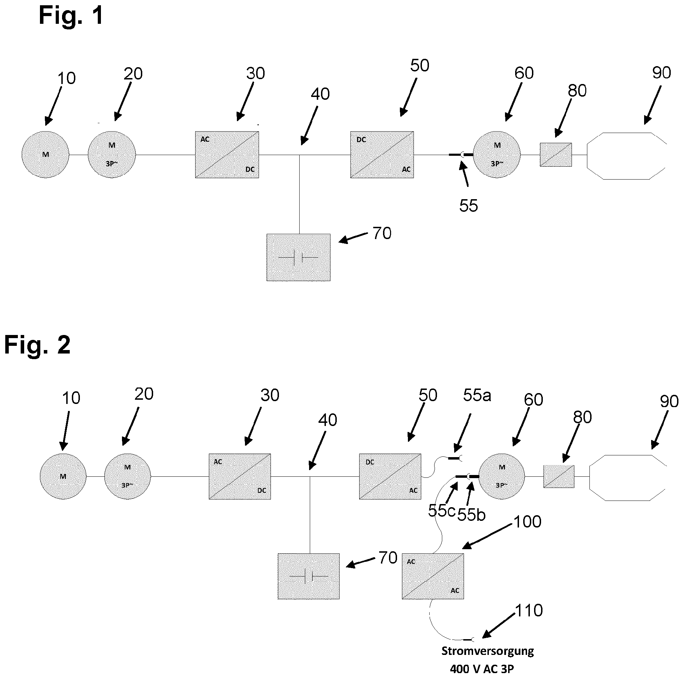

Figur 1 zeigt das Schema eines erfindungsgemäßen Fahrmischers im Normalbetrieb.

Als primäre Energiequelle des Fahrmischers dient ein Verbrennungsmotor 10, dessen Ausgangswelle mit einem Generator 20 in Verbindung steht. Der Generator 20 erzeugt eine dreiphasige Wechselspannung, die mit Hilfe eines Gleichrichters 30 in die Gleichspannung des Zwischenkreises 40 gewandelt wird. In den Zwischenkreis 40 ist zudem eine Batterie 70 eingebunden, um die erzeugte Energie zwischenzuspeichern.

Der Wechselrichter 50 transformiert die Gleichspannung des Zwischenkreises 40 in die erforderliche 3-phasige Wechselspannung für den Betrieb des Drehstrommotors 60 zum Antrieb der Mischtrommel 90. Die Welle des Drehstrommotors 60 ist über ein Getriebe 80 mit der Trommelwelle verbunden. Die elektrische Verbindung zwischen Wechselrichter 50 und Trommelmotor 60 erfolgt über eine lösbare Steckverbindung 55, wobei die Anschlussleitung des Wechselrichters 50 ein Steckerelement 55a und der Motoranschluss ein komplementäres Steckerelement 55b vorsehen, um die elektrische Verbindung zwischen Wechselrichter 50 und Trommelmotor 60 im Bedarfsfall schnellstmöglich manuell lösen zu können.

Ein solcher Bedarfsfall kann bspw. vorliegen, wenn einer der folgenden Fehler im Trommelantrieb auftritt:
o Isolationsfehler im Hochvolt-System
o Ausfall Inverter 30, 50 (Gleichrichter 30 oder Wechselrichter 50)
o Ausfall der Batterie 70
o Ausfall / Fehlfunktion von Steuergeräten

Liegt wenigstens einer der oben genannten Fehler vor, kann der Fahrmischer im Notbetrieb betrieben werden, um so dem Betreiber die Möglichkeit zu geben, die Trommel 90 vollständig zu entleeren. Für den Notbetrieb steht ein externes, autarkes Gerät 100 zur Verfügung, das elektrische Leistung aus dem öffentlichen Stromnetz 110 oder einem Generator bezieht und damit den Trommelmotor 60 mit Strom versorgt. Diese Vorrichtung 100 lässt sich unabhängig vom Fahrmischer betreiben. Alle Komponenten der Vorrichtung 100 sind in einem portablen Gehäuse untergebracht, das von idealerweise max. 2 Personen transportiert werden kann (tragbar mit Griffen oder transportabel mit Rollen).

Die Stromversorgung der Vorrichtung 100 erfolgt mittels eines Anschlusses an eine 16A oder 32A 5pol CEE Drehstromsteckdose 110. Durch Bedienvorgabe wird die maximal verfügbare Antriebsleistung auf das 16A oder 32A System angepasst. Die Verbindung zum Trommelmotor 60 erfolgt mittels des Steckers 55c, der mit dem Steckanschluss 55b des Trommelmotors verbindbar ist, wobei vorab die Verbindung zwischen Steckanschluss 55b und Stecker 55a des Fahrmischers gelöst werden muss. Damit ist der Trommelmotor 60 elektrisch unabhängig vom Antriebs- und Steuerungssystem des Fahrmischers durch die Vorrichtung 100 bedienbar.

Mittels des integralen Frequenzumrichters der Vorrichtung 100 wird der Trommelmotor 60 nach Bedienervorgabe gesteuert. Der Bediener kann mittels eines HMI den Motor 60 starten, stoppen, die Drehrichtung (Mischen, entleeren) anwählen und in definierten Grenzen die Drehzahl steuern. Der Frequenzumrichter limitiert gegebenenfalls das Ausgangsdrehmoment, falls die Drehmomentanforderung am Trommelmotor 60 mit der Netzleistung nicht umsetzbar ist. Ebenso wird die Temperatur des Antriebs überwacht und die Leistung in Abhängigkeit der Temperatur reduziert. Nach dem Entleeren der Mischtrommel 90 kann die Verkabelung 55c rückgebaut und die ursprüngliche Konfiguration gemäß Figur 1 wiederhergestellt werden.

## Patentansprüche

1. Fahrmischer mit wenigstens einem elektrischen Trommelmotor zum Antrieb der Mischtrommel, wobei der Energieversorgungsanschluss des Trommelmotors über eine elektrische Verbindungsleitung mit der internen Elektronik des Fahrmischers verbunden ist,
**dadurch gekennzeichnet,**
**dass** der Versorgungsanschluss ein Verbindungselement zur lösbaren Anbindung der Verbindungsleitung am Trommelmotor umfasst und das Verbindungselement nach dem Lösen der internen Verbindungsleitung den Anschluss einer externen Vorrichtung zur Energieversorgung des Trommelantriebs ermöglicht.

2. Fahrmischer nach Anspruch 1, **dadurch gekennzeichnet, dass** der Fahrmischer einen internen Generator umfasst, der über einen Gleichrichter mit einem Zwischenkreis des Fahrmischers verbunden ist, wobei der Generator vorzugsweise durch einen internen Verbrennungsmotors des Fahrmischers angetrieben ist.

3. Fahrmischer nach einem der vorstehenden Ansprüche, **dadurch gekennzeichnet, dass** der Trommelmotor ein Drehstrommotor ist und über einen Wechselrichter aus dem Zwischenkreis mit Energie versorgbar ist.

4. Fahrmischer nach einem der vorstehenden Ansprüche, **dadurch gekennzeichnet, dass** der Trommelmotor über ein ausgangsseitiges Getriebe die Trommel antreibt.

5. Vorrichtung zur Notversorgung eines Fahrmischers gemäß einem der vorstehenden Ansprüche, **dadurch gekennzeichnet, dass** die externe Vorrichtung einen Spannungswandler aufweist, der ausgangseitig ein komplementäres Verbindungselement zur lösbaren Verbindung mit dem Verbindungselement des Trommelmotors aufweist.

6. Vorrichtung nach Anspruch 5, **dadurch gekennzeichnet, dass** die Vorrichtung einen Netzanschluss zum Anschluss an ein externes Versorgungsnetz oder einen Generator aufweist.

7. Vorrichtung nach einem der vorstehenden Ansprüche 5 oder 6, **dadurch gekennzeichnet, dass** die Bestandteile der Vorrichtung in einem portablen Gehäuse untergebracht sind, das vorzugsweise mit ein oder mehreren Tragegriffen oder Transportrollen versehen ist.

8. Vorrichtung nach einem der vorstehenden Ansprüche, **dadurch gekennzeichnet, dass** die Vorrichtung eine Steuerung sowie Bedienelemente umfasst, um den Trommelmotor zu Starten oder Stoppen sowie bevorzugt zur Auswahl der Drehrichtung und/oder der Drehzahl.

9. Vorrichtung nach Anspruch 8, **dadurch gekennzeichnet, dass** die Steuerung konfiguriert ist eine Begrenzung des maximalen Drehmomentes vorzusehen, falls die Drehmomentanforderung des Trommelmotors durch das angeschlossene Versorgungsnetz bzw. den Generator nicht umsetzbar ist und/oder eine kritische Betriebstemperatur der Elektronik der Vorrichtung erreicht ist.

10. System bestehend aus einem Fahrmischer gemäß einem der Ansprüche 1 bis 4 sowie einer Vorrichtung gemäß einem der Ansprüche 5 bis 9.
